# EUROPÄISCHE PATENTSCHRIFT

(11) **EP 1 002 969 B1**
(45) Veröffentlichungstag und Bekanntmachung des Hinweises auf die Patenterteilung: **17.11.2004**
(21) Anmeldenummer: 99119032.3
(22) Anmeldetag: 29.09.1999
(51) Int. Cl.: F16F 9/46, B60G 21/10, B60G 17/033

(54) **Verfahren zum Schalten eines regelbaren Ventilsystems**
Method for switching an adjustable valve system
Méthode pour la commutation d'un système de valve réglable

(30) Priorität: 18.11.1998 DE 19853277
(43) Veröffentlichungstag der Anmeldung: 24.05.2000
(73) Patentinhaber: ThyssenKrupp Bilstein GmbH, 58256 Ennepetal (DE)
(72) Erfinder: Gesenhues, Ludger, Dipl.-Ing., 59425 Unna-Uelzen (DE)

(56) Entgegenhaltungen:
- EP-A- 0 486 441
- FR-A- 2 306 351
- GB-A- 2 234 091
- US-A- 2 779 587
- US-A- 4 664 410

## Beschreibung

Die Erfindung betrifft Verfahren zum Schalten eines regelbaren Ventilsystems für hydraulische Schwingungsdämpfer an Kraftfahrzeugen nach dem Oberbegriff des Anspruchs 1.

Um den Fahrkomfort von Kraftfahrzeugen zu erhöhen, ist es bekannt, die Kennung von Schwingungsdämpfem in wenigstens drei Stufen, hart, mittel, weich, zu verstellen. Hierzu wird ein hydraulischer Bypass, der parallel zum Hauptventil, das üblicherweise im Stoßdämpferkolben integriert ist, verläuft mehr oder minder weit geöffnet. Die Stellung "hart" ergibt sich bei geschlossenem Bypass. Die Schaltstellung "mittel" ergibt sich bei teilweise geöffnetem Bypass und die Stellung "weich" ergibt sich bei vollständig geöffnetem Bypass. Zur Regelung des Bypasses ist es bekannt, elektromagnetische Hydraulikventile einzusetzen. Derartige Ventile können so klein gebaut werden, daß sie mit im Stoßdämpferkolben untergebracht werden können.

Aus der DE 39 22 891 A1 ist ein Stoßdämpferkolben mit einem integrierten, elektromagnetisch angetriebenen Bypassventil bekannt. Zur stufenweisen Verstellung des Bypassventiles werden hier zwei Magnetspulen verwendet, von denen keine, eine oder beide bestromt werden, um die gewünschten Schaltzustände zu erreichen.

Nachteilig hierbei ergibt sich, daß für zwei Magnetspulen ein großer Bauraum benötigt wird.

Es ist weiterhin bekannt, für den vorbeschriebenen Einsatzzweck das Bypassventil in drei Stufen über eine Magnetspule zu betreiben. Dazu wird die Magnetspule zum Erreichen der Schaltstufe "mittel" mit einem gegenüber der Schaltstufe "weich" reduzierten Strom durchflossen. Die Stromreduzierung erfolgt dabei durch wahlweise Zuschaltung eines Vorschaltwiderstandes. Nachteilig hierbei wird unnötig elektrische Energie benötigt, die dann am Vorschaltwiderstand auch noch vernichtet werden muß. Weiterhin ist es bekannt, die Bestromung der Magnetspule dadurch zu reduzieren, daß diese wahlweise mit pulsweitenmoduliertem Strom beaufschlagt wird. Ein derartiger pulsweitenmodulierter Strom, der zum Betreiben einer Magnetspule relativ groß sein muß, führt nachteilig zu Störungen im gesamten elektrischen und elektronischen Steuer- und Regelsystem eines modernen PKW's.

Der Erfindung liegt die Aufgabe zugrunde, ein Verfahren zum Schalten eines regelbaren Ventilsystems nach dem Oberbegriff des Anspruchs 1 derartig weiterzubilden, daß bei Einsatz eines elektromagnetischen Bypassventils nur eine Magnetspule benötigt wird und daß zum Beaufschlagen der Magnetspule mit reduziertem Strom zur Steuerung der Schaltstufe "mittel" keine hohen Energieverluste entstehen und auch keine Störungen in das elektrische Bordnetz des Kraftfahrzeuges induziert werden.

Diese Aufgabe wird erfindungsgemäß mit den Merkmalen des Anspruchs 1 gelöst. Vorteilhafte Aus- und Weiterbildungen sind in den Merkmalen der Ansprüche 2 bis 6 beschrieben.

Die mit der Erfindung erzielten Vorteile bestehen insbesondere darin, daß eine einfache Regelung zum Schalten der Ventilsysteme gefunden wurde. Diese Regelung ist so einfach, daß sie sich sogar zum Nachrüsten normaler Kraftfahrzeuge mit regelbaren Ventilsystemen für hydraulische Stoßdämpfer eignet.

Ein Ausführungsbeispiel der Erfindung wird nachfolgend näher beschrieben. Nach der Erfindung wird die einzige Magnetspule des elektromagnetisch in drei Schaltstellungen schaltbaren Ventils alternativ mit voller Spannung beaufschlagt oder dadurch, daß zwei Magnetspulen zweier verschiedener Schwingungsdämpfer in Reihe geschaltet werden, nur mit halbem Strom durchflossen. Dadurch können die drei Schaltstufen "hart" (kein Stromdurchfluß), "mittel" (halber Stromdurchfluß) und "weich" (voller Stromdurchfluß) in einfacher Weise geschaltet werden.

Je nach Fahrzeugtyp und Regelungsart ist es möglich, beispielsweise die Magnetspulen jeweils der Schwingungsdämpfer der Radaufhängungen der Vorderachse und der Hinterachse wahlweise parallel zu schalten. In gleicher Weise ist es jedoch auch möglich, die Magnetspulen an den Schwingungsdämpfern jeweils der rechten Radaufhängungen und der linken Radaufhängungen wahlweise in Reihe zu schalten. Auch andere oder programmabhängige Schaltvariationen, beispielsweise kreuzweise Verknüpfung oder Verknüpfung von zwei beliebigen Schwingungsdämpfern je nach Fahrzeugverhalten, sind möglich.

Die Ansteuerung kann beliebig gewählt werden. Als einfachstes ist die Ansteuerung über einen Handwahlschalter verwendbar. Dieses würde besonders für den Nachrüstfall von Interesse sein. Es ist jedoch in gleicher Weise möglich, die vorbeschriebene Schaltung über elektrische oder elektronische Programme anzusteuern.

## Patentansprüche

1. Verfahren zum Schalten eines regelbaren Ventilsystems für hydraulische Schwingungsdämpfer an Kraftfahrzeugen, bei denen zwei oder mehr elektromagnetische, vorzugsweise in drei Schaltstellungen schaltbare Ventile vorzugsweise einen parallel zum Hauptventil angeordneten Bypasskanal ganz oder teilweise öffnen oder schließen, wobei die Schaltstellungen der Ventile durch vollen, teilweisen oder keinen Stromdurchfluß von die Ventile verstellenden Magnetspulen erzielt werden, wobei der teilweise Stromdurchfluß durch wahlweise Reihenschaltung von zwei oder mehr Magnetspulen zweier oder mehrerer Ventile erzielt wird.

2. Verfahren nach Anspruch 1, **dadurch gekennzeichnet, daß** das Hauptventil als mechanisches Ventil ausgebildet ist und im Stoßdämpferkolben angeordnet ist.

3. Verfahren nach Anspruch 1 oder Anspruch 2, **dadurch gekennzeichnet, daß** an jedem Stoßdämpfer nur jeweils eine ventilverstellende Magnetspule angeordnet ist.

4. Verfahren nach Anspruch 3, **dadurch gekennzeichnet, daß** die Magnetspulen der Stoßdämpfer der jeweils rechten und linken Radaufhängung der Vorderachse und der Hinterachse wahlweise in Reihe geschaltet werden.

5. Verfahren nach Anspruch 3, **dadurch gekennzeichnet, daß** die Magnetspulen der Stoßdämpfer der rechtsseitigen und der linksseitigen Radaufhängungen wahlweise in Reihe geschaltet werden.

6. Verfahren nach Anspruch 3, **dadurch gekennzeichnet, daß** die Magnetspulen der Stoßdämpfer in beliebiger Kombination in Reihe geschaltet werden.

## Claims

1. Method for switching a controllable valve system for hydraulic vibration dampers in motor vehicles, wherein two or more electromagnetic valves, which can be switched preferably in three switching positions, open or close, completely or partly, preferably one bypass duct which is disposed in parallel with the main valve, wherein the switching positions of the valves are obtained by full, part or zero current flow from magnetic coils controlling the valves, wherein the part current flow is obtained by selectively connecting in series two or more magnetic coils of two or more valves.

2. Method as claimed in Claim 1, **characterised in that** the main valve is formed as a mechanical valve and is disposed in the shock absorber piston.

3. Method as claimed in Claim 1 or Claim 2, **characterised in that** in each case only one valve-controlling magnetic coil is disposed on each shock absorber.

4. Method as claimed in Claim 3, **characterised in that** the magnetic coils of the shock absorbers of each of the right and left wheel suspension of the front and rear axle are selectively connected in series.

5. Method as claimed in Claim 3, **characterised in that** the magnetic coils of the shock absorbers of the right-hand side and left-hand side wheel suspensions are selectively connected in series.

6. Method as claimed in Claim 3, **characterised in that** the magnetic coils of the shock absorbers are connected in series in any combination.

## Revendications

1. Procédé de commutation d'un système régulable de soupapes pour des amortisseurs hydrauliques de véhicules automobiles, dans lesquels deux ou plusieurs soupapes électromagnétiques qui peuvent être commutées de préférence dans trois positions de commutation ouvrent ou ferment entièrement ou partiellement de préférence un canal de dérivation disposé parallèlement à la soupape principale, les positions de commutation des soupapes étant obtenues par passage complet ou partiel ou l'absence de passage de courant dans des bobines magnétiques qui déplacent les soupapes, le passage partiel de courant étant obtenu par commutation sélective en série de deux ou plusieurs bobines magnétiques de deux ou plusieurs soupapes.

2. Procédé selon la revendication 1, **caractérisé en ce que** la soupape principale est configurée comme soupape magnétique et est disposée dans le piston de l'amortisseur.

3. Procédé selon la revendication 1 ou la revendication 2, **caractérisé en ce qu'**une seule bobine magnétique de déplacement de soupape est disposée sur chaque amortisseur.

4. Procédé selon la revendication 3, **caractérisé en ce que** les bobines magnétiques des amortisseurs des suspensions de la roue droite et de la roue gauche de l'essieu avant et de l'essieu arrière sont branchées sélectivement en série.

5. Procédé selon la revendication 3, **caractérisé en ce que** les bobines magnétiques des amortisseurs des suspensions des roues droites et des roues gauches sont branchées sélectivement en série.

6. Procédé selon la revendication 3, **caractérisé en ce que** les bobines magnétiques des amortisseurs sont branchées en série dans une combinaison quelconque.
